# EUROPEAN PATENT APPLICATION

(11) **EP 4 737 038 A1**
(43) Date of publication of application: **06.05.2026**
(21) Application number: 24210994.0
(22) Date of filing: 05.11.2024
(51) Int. Cl.: B23B 51/00, B23B 51/06, B23B 47/34, B23B 51/02

(54) **DRILL, DRILLING SYSTEM, DRILLING METHOD AND USE OF A DRILL**

(71) Applicant: KYOCERA UNIMERCO TOOLING A/S, 7451 Sunds (DK)
(72) Inventor: Olesen, Brian Svane, 7840 Højslev (DK); Wulff, Michael Bank, 7400 Herning (DK); Thomsen, Tyge Roslin, 7430 Ikast (DK); Jensen, Boris, 7400 Herning (DK)
(74) Representative: Viering, Jentschura & Partner mbB Patent- und Rechtsanwälte

(57) **Abstract**

A drill (1) is provided, extending from a first end (3a) to a second end (3b) along a longitudinal axis (X) and comprising a cutting tip (7) at the first end (3a) and a shaft (5) extending from the cutting tip (7) towards the second end (3b),the cutting tip (7) comprising at least one cutting edge (11) located at the first end (3a) and a flute (13) extending from the cutting edge (11) towards the second end (3b), and the shaft (5) comprising a circumferentially enclosed discharge channel (31) connecting to the flute (13) at a side away from the cutting edge (11), extending towards the second end (3b) and terminating in a discharge opening (37) in an outer circumference of the shaft (5) for discharging swarf generated by the cutting edge (11), a pressurized gaseous medium supply channel having a supply opening for receiving a pressurized gaseous medium and extending from the supply opening towards the first end (3a), the supply opening located closer to the second end (3b) as the discharge opening (37), and an injection channel extending between an inflow opening connected to the pressurized gaseous medium supply channel and an injection opening connected to the discharge channel (31), wherein the injection channel is configured to inject the pressurized gaseous medium through the injection opening into the discharge channel (31) in an injection direction towards the second end (3b), thereby creating a vacuum at the first end (3a).

## Description

### Technical Field

The present invention relates to a drill, a drilling system, a drilling method and use of a drill, and in particular to a drill using pressurized gaseous medium to create a vacuum at the drill tip thereby discharging swarf generated during the drilling.

### Background

Drilling holes in materials like metal, plastics, wood, fiber reinforced plastics, composites thereof, etc. is a well-known manufacturing technique in various applications like mechanical engineering, aeronautical engineering, automotive engineering, etc.

Conventional drilling is carried out with drills having a shank and a drill body with a cutting tip and flutes as means for transporting swarf created at the cutting tip away from the cutting tip and out of the drilled hole. During swarf transport, the swarf will be moved away from the cutting tip with the help of the flutes and a cylindrical enclosure, e.g. formed by the walls of the drilled hole. The created swarf may have various forms depending on the material being drilled. Metallic and plastic materials will often produce long curly swarf, whereas e.g. fiber reinforced plastics will often produce dust. In any case, the drilling process will leave particles of the drilled material which may contact and/or attach to the wall of the drilled hole, resulting in a drilling process which will potentially produce a hole with limited accuracy and a coarse surface roughness. Furthermore, in the conventional drilling, often some residual swarf remains in the drilled hole and has to be removed manually.

Further and in case of layered materials, the generated swarf might penetrate into interfaces between material layers, thereby promoting contamination of the material, or in case of drilling into blind cavities, the swarf might become trapped in the cavity thereby creating contamination therein. Thus, in the conventional drilling, to circumvent said issues, additional processing of the drilled holes and/or extensive cleaning of said cavities or layer interfaces has to be carried out.

Thus, there remains a need in the conventional drilling processes to enhance swarf removal from the drilled hole with less exposure of the drilled hole to the swarf.

### Brief Summary

In order to solve the above problem, the present disclosure provides a drill with the features according to claim 1, a drilling system with the features according to claim 11, use of a drill with the features according to claim 13 and a drilling method with the features according to claim 14. Further preferred embodiments of the drill, the drilling system and the drilling method are described in the respective dependent claims.

That is, a drill is provided, extending from a first end (e.g. cutting end) to a second end (e.g. attachment end, e.g. attachable to a drill chuck of a drilling machine) along a longitudinal axis and comprising a cutting tip at the first end and a shaft extending from the cutting tip towards the second end, the cutting tip comprising at least one (e.g. integral) cutting edge (e.g. 2, 3, 4 or more) located at the first end and a flute (e.g. in the same quantity as the cutting edges) extending from the cutting edge towards the second end, and the shaft comprising a circumferentially enclosed discharge channel (e.g. in a cross-section of the drill perpendicular through the longitudinal axis fully enclosed, e.g. by a circumferential wall of the shaft or a circumferential wall of an additional elongated sleeve (e.g. cylindrical body) disposed around the shaft) connecting to the flute at a side away from the cutting edge (e.g. 2, 3, 4 or more discharge channels, e.g. in the same quantity as the flutes), extending towards the second end and terminating in a (e.g. radial) discharge opening in an outer circumference of the shaft for discharging swarf (e.g. chips, dust, etc.) generated by the cutting edge, a pressurized gaseous medium supply channel (e.g. 2, 3, 4 or more pressurized gaseous medium supply channels; the pressurized gaseous medium supply channel may define a flow path via a single or branching bore, a sponge-like structure, a honeycomb structure, etc.) having a supply opening for receiving a pressurized gaseous medium (e.g. having a higher pressure as compared to the atmospheric pressure at the cutting tip, the pressurized gaseous medium being e.g. pressurized air, pressurized nitrogen, etc. and optionally containing a minimal amount of lubrication liquid, e.g. cutting oil) and extending from the supply opening towards the first end, the supply opening located closer to the second end as the discharge opening, and an injection channel (e.g. 2, 3, 4 or more injection channels) extending between an inflow opening connected to the pressurized gaseous medium supply channel and an injection opening connected to the discharge channel (e.g. more than one injection channel is connected to one discharge channel and/or more than one injection channel is connected to the pressurized gaseous medium supply channel), wherein the injection channel is configured to inject the pressurized gaseous medium through the injection opening into the discharge channel in an injection direction towards the second end, thereby creating a vacuum at the first end.

Further in the drill, when a distance (e.g. along the longitudinal axis) from a point at which the longitudinal axis intersects the first end to the injection opening is indicated as d, and, when viewed in a cross-section of the shaft perpendicular to the longitudinal axis and intersecting the injection opening, a maximum outer diameter of the shaft is indicated as D, a ratio of D/d may be in a range of 0,5 to 1,5, preferred in a range of 0,7 to 1,2, and further preferred in a range of 0,8 to 1,0. For example, no other injection opening is located closer to the first end than the foregoing specified injection opening.

Further, in the drill, an angle formed between the longitudinal axis and the injection direction (e.g. direction in which the pressurized gaseous medium leaves the injection opening) may be in a range of 5° to 85°, preferred in a range of 10° to 60°, and further preferred in a range of 15° to 30° (in case of more than one injection channel, the injection direction might be e.g. the same or different for each injection channel).

Further, in the drill, when viewed in a cross-section of the injection channel perpendicular to the injection direction, a minimum cross-sectional area of the injection channel is indicated as a, and, when viewed in a cross-section of the shaft perpendicular to the longitudinal axis and intersecting the injection opening, a cross-sectional area of the discharge channel is indicated as A, a ratio of A/a may be in a range of 5 to 20, preferred in a range of 4 to 15, and further preferred in the range of 3 to 10 (in case of more than one injection channel, the minimum cross-sectional area might be e.g. the same or different for each injection channel).

Further, the cutting tip may be separate from the shaft and attachable to the shaft.

Further, the shaft may include a tubular body (e.g. along at least a section of the shaft; e.g. a cylindrical tubular body having a constant diameter or a frustoconical tubular body) having the discharge channel formed as its hollow interior and enclosed by a circumferential wall of the shaft, and the pressurized gaseous medium supply channel and the injection channel may be formed in the wall.

Further, the shaft may be a drill bit including a flute connected to the flute of the cutting tip at a side away from the cutting edge and extending towards the second end in a helix manner (e.g. 2, 3, 4 or more flutes, e.g. in the same quantity as the flute(s) of the cutting tip), the flute of the shaft forming the discharge channel, and the drill may further comprise an elongated sleeve (e.g. cylindrical body having e.g. along a section thereof a constant diameter or frustoconical body) configured to accommodate the shaft in its hollow interior, the sleeve having a radial opening at one end (end close to the second end) penetrating the circumferential wall of the sleeve and an axial opening at the other end (end close to the first end), wherein, when the shaft is accommodated in and (e.g. translationally and rotationally) fixed to the sleeve, the cutting tip (e.g. axially) protrudes from the axial opening of the sleeve, the discharge channel is radially delimited by the circumferential wall of the sleeve and the discharge opening of the shaft and the radial opening of the sleeve overlap with one another so as to discharge swarf generated by the cutting edge.

Further, the pressurized gaseous medium supply channel may be formed along a straight line in the web of the shaft or may be formed along a helix following a corresponding land of the flute of the shaft.

Further, the injection channel may be formed as a trough or groove (in the following trough) in the outer circumference of the shaft and radially delimited by the circumferential wall of the sleeve.

Further, the shaft may be a 3D printed body (e.g. via powder bed fusion, e.g. selective laser melting, direct metal laser sintering, electron beam melting, etc.), optionally a 3D printed and sintered metal body (e.g. green body via binder jetting and subsequent sintering and/or liquid metal infusion).

Furthermore, a drilling system is provided, including a drill as described above, a drilling device configured for rotating and translating the drill (e.g. a stationary or hand held drilling machine), and a pressurized gaseous medium source (e.g. pressurized air bottle, a pressurized air system like a pneumatic system already present at a tooling site, e.g. providing pressurized gaseous medium at e.g. 0,6 to 7 MPa) connected to the supply opening and configured for supplying the pressurized gaseous medium to the drill and adjusting a flow rate of the pressurized gaseous medium (e.g. via an adjustable valve, e.g. manually operated by the operator or automatically operated by a control device of the drilling system) so that a vacuum is created at the first end of the drill.

Further, the drilling system may include an oscillation device connected to the drill (e.g. a chuck of the drilling device) and configured for oscillating the drill along the longitudinal axis (e.g. referred to as vibration assisted drilling technology, having a frequency adapted to the material, e.g. based on the revolution of the drill and/or the feed so as to achieve unequal intervals between peaks of adjacent amplitudes), thereby adjusting the size of the swarf generated during cutting, and/or the drilling system may further comprise a vacuum source connected to the discharge opening or the radial opening and configured for applying a (e.g. additional) vacuum.

Furthermore, use of a drill and/or a drilling system as described for drilling of metal (e.g. titanium, aluminum, stainless steel, brass, cast iron, etc.), fiber reinforced plastics (e.g. glass fiber reinforced plastics, carbon fiber reinforced plastics, etc.), and/or composites (e.g. laminates) thereof, and/or for drilling a through hole opening into a blind cavity (e.g. a cavity in a work piece having no other access than the drilled hole), for example a through hole having a diameter equal to or less than 40 mm.

Furthermore, a drilling method is provided, comprising the steps of rotating a drill as described above and supplying the pressurized gaseous medium to the supply opening of the drill, so that a vacuum is created at the first end of the drill, thereby removing swarf generated by the cutting edge from the cutting tip.

Further, in the drilling method, when the drill is translated into the work piece for drilling, the drill may be oscillated along its longitudinal axis (e.g. referred to as vibration assisted drilling technology).

The drill, the drilling system and the drilling method as described above provide the advantageous technical effects:

Due to the removal of the generated swarf from the drilled hole within the drill, i.e. without contact of the swarf and the walls of the drilled hole, high accuracy drilling and smooth surface finish of the drilled holes is achievable by a single drilling process. At the same time exposure to swarf outside of the drilled hole can be prevented.

Due to the use of the pressurized gaseous medium for cooling the drill and discharging the generated swarf, uncontaminated swarf, i.e. without or neglectable contamination by a cutting fluid, can be generated. Furthermore, manageable swarf size is achieved thereby.

Due to the use of the pressurized gaseous medium in the drill as described above, a strong vacuum can be generated at the cutting tip so that swarf is quickly and completely internally removed from the cutting tip, thereby making it possible to drill into blind cavities without contaminating said cavities with swarf.

Although the above described drill, drilling system and drilling method have been described in conjunction with drilling holes, the present disclosure is not limited thereto. The described principles are generally applicable to rotary tools like chamfering tools and/or core drilling/boring. Furthermore, the described principles are also applicable to stationary tools for machining in which the work piece but not the tool rotates, e.g. lathe chisels.

In the following, the present disclosure is described in more detail by exemplary embodiments.

### Brief Description of the Drawings

Fig. 1 shows an exploded perspective view of a shaft and a cutting tip of a drill according to a first embodiment.
Fig. 2 shows a perspective view of the shaft and the cutting tip of the drill of the first embodiment assembled with one another.
Fig. 3 shows a perspective detail view of the cutting tip of the drill of the first embodiment.
Fig. 4 shows a side view of the shaft of the drill of the first embodiment viewed in direction IV in Fig. 1, wherein the internal structure (discharge channel, pressurized gaseous medium supply channel, injection channels) is shown.
Fig. 5 shows a cut-away view of the shaft of the drill of the first embodiment along the pressurized gaseous medium supply channel and one pressurized gaseous medium supply channel branch in Fig. 1.
Fig. 6 shows an exploded perspective view of a drill bit and a sleeve of a drill according to a second embodiment.
Fig. 7 shows a perspective view of the drill bit and the sleeve of the drill of the second embodiment assembled with one another.
Fig. 8 shows a perspective detail view of the drill bit of the second embodiment
Fig. 9 shows a perspective detail view of the cutting tip and the cutting portion of the drill bit of the drill of the second embodiment.
Fig. 10 shows a schematic cut-away view of the drill bit and the sleeve of the drill of the second embodiment as indicated by line X-X in Fig. 7.
Fig. 11 shows perspective views of an exploded drill (upper view) and an assembled drill (lower view) according to a variation of the second embodiment.
Fig. 12 shows a schematic view of a drilling system according to an embodiment.

### Detailed Description

In the following detailed description, reference is made to the attached figures, which form part thereof and in which specific embodiments are shown for illustrative purposes. It is to be understood that the features of the specific embodiments described herein can be combined with each other, unless specifically stated otherwise (e.g. embodiments which combine, for example, separate and integral cutting tips, different numbers of pressurized gaseous medium supply channels, discharge channels, injection channels, cutting edges, etc.).

Even without an explicit description, numerical values or ranges used herein are subject to the usual tolerances of ± 5%. Furthermore, designations such as "parallel" and "perpendicular" are subject to a tolerance range of ± 3° even without an explicit description.

In the figures, sizes, thicknesses, distances, ratios etc. of the elements shown may be exaggerated for the purpose of clarity. Furthermore, in the figures, identical reference signs denote elements of the same function or nature in the embodiments.

### Drill - first embodiment

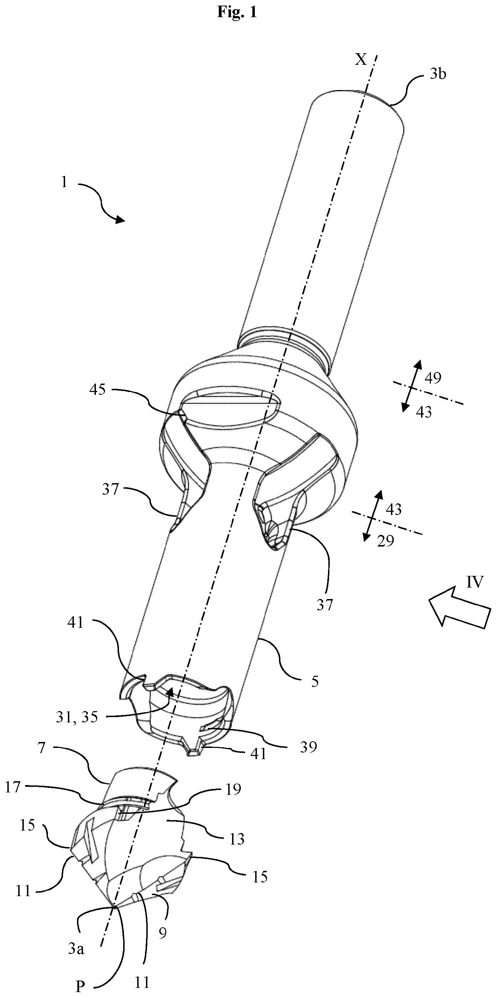

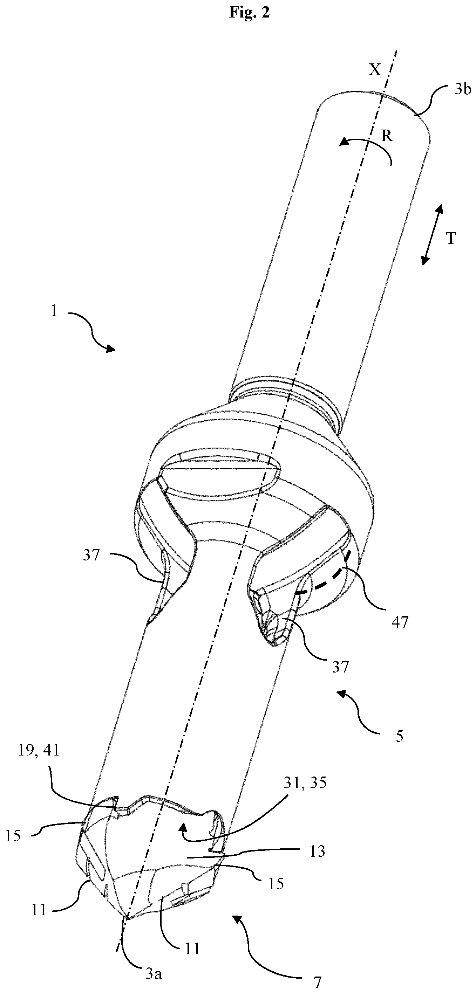

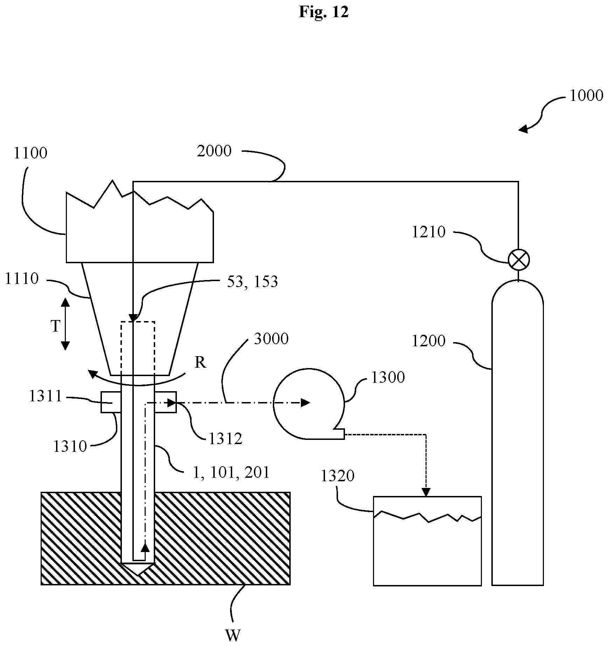

Referring to Figs. 1 to 5, the drill 1 of the first embodiment extends from a first end 3a (front end or drilling end) to a second end 3b (rear end or attachment end) along a longitudinal axis X. The drill 1 comprises a hollow cylindrical shaft 5 at the first end 3a and a solid shaft at the second end 3b and a separate cutting tip 7 located at the first end 3a and attached to the shaft 5. The shaft 5 is attachable at the second end 3b to a drilling machine via a drilling chuck (described in more detail further below) so that the drill 1 is rotatable in a rotation direction R around the longitudinal axis X and translatable forward and backward in a translation direction T along the longitudinal axis X in a manner enabling drilling (see e.g. Figs. 2 and 12).

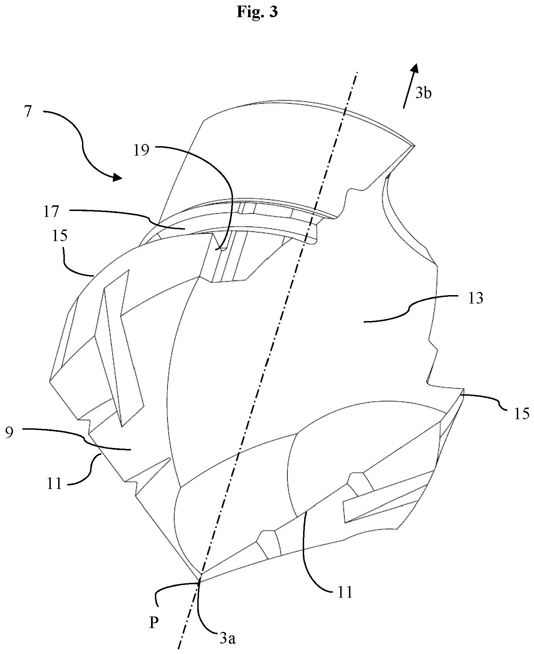

Now referring to the cutting tip 7, when attached to the shaft 5, i.e. in a state ready for drilling, the cutting tip 7 forms the tip (foremost end) of the drill 1, i.e. the portion of the drill 5 being in contact with the to be drilled material. As shown in Fig. 3, the cutting tip 7 comprises a conical end face 9, two cutting edges 11 located at the first end 3a and two flutes 13 respectively extending from the cutting edges 11 towards the second end 3b in a helix manner. A point P at the conical end face 9 of the tip at which the conical end face 9 intersects with the longitudinal axis X is the leading part of the drill 1. The cutting edges 11 extend radially from the point P in a 180° point-symmetrical manner along the conical end face 9 (e.g. having a conic angle of 60° up to 180°) towards the outer circumference of the cutting tip 7. The cutting edges 11 are formed at a ridgeline of the conical end face 9 and the respective flute 13. During cutting, the cutting edges 11 cut into the to be cut material thereby creating swarf (cutting chips) which is pushed into the flutes 13 and transported towards the second end 3b. At a location of the cutting tip 7 at which the conical end face 9 reaches its maximum diameter, i.e. at a side away from the first end 3a, two (optional) margins 15 on opposing sides (180° point-symmetrical with regard to the longitudinal axis X) are provided defining the maximum drilling diameter of the drill 1 and serving to guide and center the drill 1 in the drilled hole.

Further, the cutting tip 7 has at its other end (end away from the first end 3a) a connection means, e.g. a (e.g. single) external thread 17 for attachment at the shaft 5 and a mechanical stop 19, e.g. shaped as a step, so as to form a form lock with a corresponding connection means of the shaft 5 (described below) when the cutting tip 7 is fully attached at the shaft 5. When attached to the shaft 5, the cutting tip 7 is fixed without any rotational or translational degree of freedom with respect to the shaft 5.

The drill 1 of the first embodiment has a maximum drilling diameter of e.g. 10 mm to 25 mm and is usable for drilling of e.g. aluminum and fiber reinforced plastics. The shaft 5 is manufactured from steel, e.g. using additive manufacturing technologies like selective laser sintering or casting. The cutting tip 7 is manufactured (e.g. in whole or in part) from e.g. steel, cemented carbide, cermet, brazed on poly crystalline diamond etc., e.g. using additive manufacturing technologies like sintering or subtractive manufacturing technologies like spark eroding, cutting, grinding, etc. The cutting edges 11 may be integral with the cutting tip 7 or may be part of separate cutting inserts attachable at the cutting tip 7. The cutting tip 7 may be deposited with a coating layer, e.g. TiCN, TiN, diamond, etc. on a surface thereof, e.g. the conical end face 9, the cutting edges 11, the flutes 13, etc. by a chemical or physical vapor deposition method (CVD or PVD) in order to enhance durability of the drill 1.

The configuration of the cutting tip 7 is well known to a person skilled in the art and may be adapted dependent on a material to be drilled, a size of the drill, etc. That is, the cutting tip 7 may have one of many possible configurations, e.g., may have three, four or more cutting edges, multiple margins, a chisel edge, etc., a description of which will be omitted. Further, other means of fixing the cutting tip 7 to the shaft 5 may be clamping, brazing, or using pins and/or separate screws, etc. Such attachment means are readily adaptable by the person skilled in the art as required, e.g. dependent on the size of the drill.

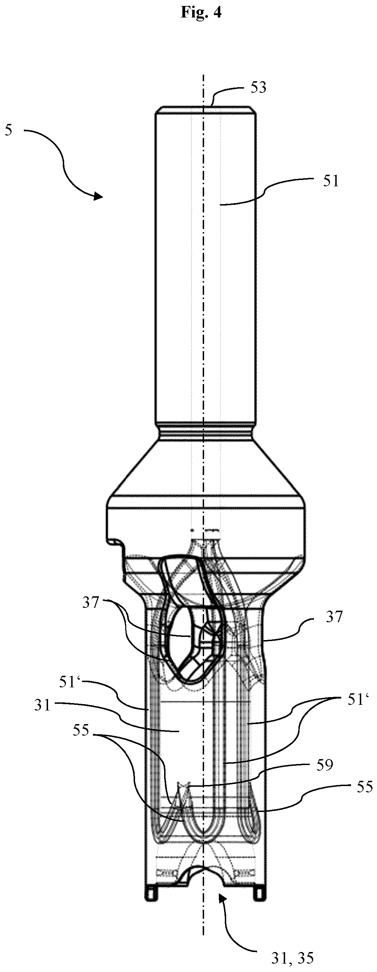

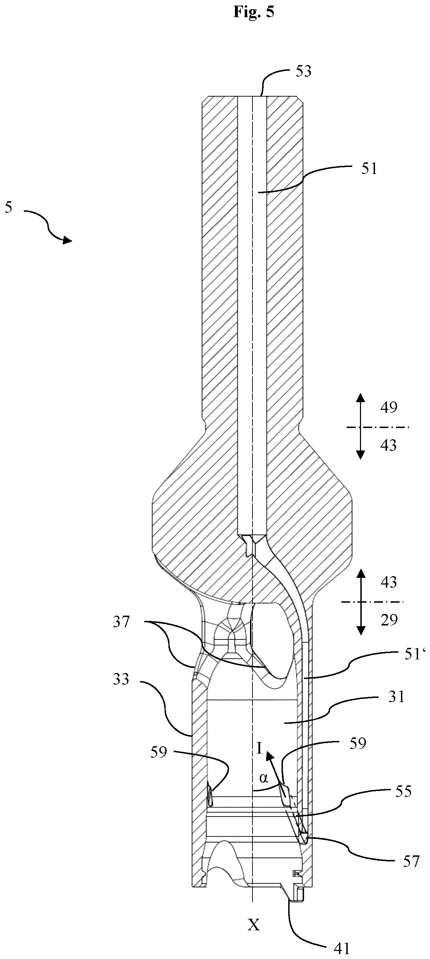

Now referring to the shaft, see Figs. 4 and 5, the shaft 5 comprises a cylindrical tubular body extending along the longitudinal axis X. Extending from the first end 3a towards the second end 3b, the shaft 5 comprises a drilling portion 29 including a single circumferentially enclosed discharge channel 31 in its hollow interior, a flange portion 43 and a shank portion 49, the latter two being solid portions. The drilling portion 29 has a smaller diameter as the largest drilling diameter of the drill 1 (defined by the margins 15), i.e. during drilling the drilling portion 29 does not contact the wall of the drilled hole, thereby keeping drilling accuracy high and surface roughness of the drilled hole low. The discharge channel 31 is circumferentially enclosed by a circumferential wall 33 of the shaft 5, has an axial opening 35 at one end of the shaft 5 (first end 3a), extends from said axial opening 35 towards the second end 3b and terminates in three discharge openings 37 which radially penetrate through the circumferential wall 33 of the shaft 5 for discharging the swarf from the drill 1. The discharge openings 37 are spaced around the circumference of the shaft 5 in regular intervals of 120°. Alternatively, dependent on the amount and size of generated swarf, providing one or two discharge openings 37 may be sufficient. During drilling, the discharge openings 37 may (at least partially) remain outside of the drilled hole so that the swarf can be ejected to the outside of the drilled work piece K.

At the one end (first end 3a) of the discharge channel 31, the shaft 5 has an internal thread 39 corresponding to the external thread 17 of the cutting tip 7 and has a mechanical stop 41 corresponding to the mechanical stop 19 of the cutting tip 7. When the cutting tip 7 is attached to the shaft 5, i.e. when the threads 17, 39 engage one another and the mechanical stops 19, 41 form the form lock, the discharge channel 31 connects to the two flutes 13 of the cutting tip 7 at a side away from the cutting edges 11. That is, when the cutting tip 7 is attached to the shaft 5, the two flutes 13 open into the discharge channel 31 thereby providing a path for the swarf generated by the cutting edges 11 into the discharge channel 31.

Between the discharge openings 37 and the second end 3b, the shaft 5 has the flange portion 43 having a larger diameter as the largest drilling diameter of the drill 1 (defined by the margins 15). The discharge openings 37 may overlap with the flange portion 43, i.e. may extend into the flange portion 43 and may be formed in a smoothly curved manner so as to enhance swarf discharge, and the flange portion 43 may have a spanner flat 45 for fastening the drill 1 in a drilling chuck (described further below). The flange portion 43 has a e.g. frustoconical shape, respectively facing the first end 3a and the second end 3b and a portion with constant diameter located therebetween. The flange portion 43 may include a further cutting edge 47 at the frustoconical portion facing the first end 3a which may serve as a chamfering cutting edge (in Fig. 2 cutting edge 47 is schematically shown). That is, by the correspondingly configured drill 1 the flange portion 43 with its cutting edge 47 can be brought in contact with an edge of the drilled hole, thereby removing possible burr at the circumference of the hole and impinging a chamfer to said edge of the drilled hole. Correspondingly, for the brief period of chamfering, parts of the discharge openings 37 may be covered by the drilled hole. Further, the shaft 5 comprises the shank portion 49 located between the flange portion 43 and the second end 3b and serving as interface with a drilling chuck of a drilling machine (not shown). The shank portion 49 may be configured to be attached via a jaw chuck assembly, a quick-action chuck assembly, a weldon chuck assembly, etc. The general configurations of the spanner flat 45 and the shank portion 49 are well known to the person skilled in the art so that a description thereof will be omitted.

As can be seen in Figs. 4 and 5, the shaft 5 comprises a pressurized gaseous medium supply channel 51 extending from a supply opening 53 for receiving a pressurized gaseous medium, in the present case e.g. pressurized air, from an external pressurized gaseous medium source towards the first end 3a. The supply opening 53 is located closer to the second end 3b as the discharge openings 37, in the present case located at the second 3b in the shank portion 49 and coincidental to the longitudinal axis X. Alternatively, the supply opening 53 can be located closer to the discharge openings 37, e.g. in the shank portion 49 or in the flange portion 43 and may open radially in a circumference of the shaft 5. A location of the supply opening 53 can be adapted by the person skilled in the art, e.g. dependent on the type of drill chuck.

The pressurized gaseous medium supply channel 51 functions to guide the pressurized gaseous medium through the drill 1 towards the first end 3a and extends from the supply opening 53 as a single bore and branches into three pressurized gaseous medium supply channel branches 51' in the interior of the flange portion 43 (the pressurized gaseous medium supply channel branches 51' may be considered as being part of the pressurized gaseous medium supply channel 51). The pressurized gaseous medium supply channel branches 51' extend from the branching point in the flange portion 43 into the circumferential wall 33 of the shaft 5 and towards the first end 3a so that between two adjacent discharge openings 37 one pressurized gaseous medium supply channel branch 51' passes through the circumferential wall 33 of the shaft 5. It is also possible to provide one pressurized gaseous medium supply channel 51 without branches or less than three pressurized gaseous medium supply channel branches 51' as long as sufficient pressurized gaseous medium can be supplied towards the first end 3a. Due to the e.g. additive manufacturing of the shaft 5, the pressurized gaseous medium supply channel 51 and the pressurized gaseous medium supply channel branches 51' may be formed so as to reduce pressure loss, in a size and shape providing sufficient cross-sectional area for flow of the pressurized gaseous medium, reducing notch stresses in the shaft 5, and may be adapted to the general shape of the circumferential wall 33 of the shaft 5. That is, within the circumferential wall 33 of the drilling portion 29, the cross-section of the pressurized gaseous medium supply channel branches 51' may be e.g. circular, kidney-shaped, trapezoidal, etc. in order to achieve a sufficient cross-sectional area for the flow of pressurized gaseous medium therein.

The shaft 5 further comprises three injection channels 55 in the drilling portion 29 each extending between an inflow opening 57 connected to the respective pressurized gaseous medium supply channel branch 51' and an injection opening 59 connected to the discharge channel 31. The injection channels 55 are formed in the circumferential wall 33 of the shaft 5. The injection opening 59 is located closer to the second end 3b as the inflow opening 57. That is, the injection channels 55 reverse the flow direction of the pressurized gaseous medium supply channel branches 51' and inject the pressurized gaseous medium into the discharge channel 31. The injection channels 55 are each configured to inject the pressurized gaseous medium through the injection opening 59 into the discharge channel 31 in an injection direction I towards the second end 3b, thereby creating a vacuum at the first end 3 a.

An angle α between the longitudinal axis X and the injection direction I is circa 20° to 25° for each injection channel 55 (see e.g. Fig. 5; in a case that the injection direction I and the longitudinal axis X do not cut each other, i.e. are skew lines, the same applies). Further, the injection direction I might have a helix angle, e.g. circa 10° to 30° (e.g. when the injection direction I is projected on an inner surface of the circumferential wall 33 of the shaft 105, an angle measured between a line drawn parallel to the longitudinal axis X and the injection direction I is the helix angle), thereby creating a swirl flow around the inner circumference of the discharge channel 31 towards the discharge openings 37 and, thus, making the vacuum stronger.

Further, when a distance along the longitudinal axis X from a point at which the longitudinal axis X intersects the first end 3a (point P) to the injection opening 59 is indicated as d, and, when viewed in a cross-section of the shaft 5 perpendicular to the longitudinal axis X and intersecting the injection opening 59, a maximum outer diameter of the shaft is indicated as D, a ratio of D/d is in a range of 0,8 to 1,0.

Further, when viewed in a cross-section of the injection channel 55 perpendicular to the injection direction I, a minimum cross-sectional area of the injection channel 55 is indicated as a, and, when viewed in a cross-section of the shaft 5 perpendicular to the longitudinal axis X and intersecting the injection opening 59, a cross-sectional area of the discharge channel 31 is indicated as A, a ratio of A/a is in a range of 3 to 10.

By the above configuration, each configuration (D/d or A/a) alone or in conjunction with one another, generation of a vacuum at the first end 3a, i.e. the tip of the cutting tip 7, can be adjusted, e.g. dependent on the drilling diameter, the material to be cut, the rotational speed, the feed, etc., each influencing the size of the swarf generated during drilling. That is, the vacuum is adjusted to be strongest close to the injection openings 59 and lesser at the tip (cutting edges 11 of the cutting tip 7), thereby creating a pressure differential from the tip towards the second end 3b.

The swarf generated by the cutting edges 11 is forced into the flutes 13 by rotational force of the drill 1 and the pressure differential from the tip towards the injection openings 59, and is transported into the discharge channel 31 towards the second end 3b. Further, by injecting the pressurized gaseous medium into the discharge channel 31 towards the second end 3b, a flow of pressurized gaseous medium is generated from the injection openings 59 towards the discharge openings 37, thereby forcing the swarf in the discharge channel 31 towards and out of the discharge openings 37 (air and swarf flow). At the same time the injected pressurized gaseous medium serves as a cooling media for the drill 1. Further injection channels 55 and injection openings 59 may be present further downstream in the discharge channel 31, i.e. a plurality of injection openings 59 may be arranged from the first end 3a towards the second end 3b, thereby increasing the flow rate of the pressurized gaseous medium within the discharge channel 31 towards the discharge openings 37 and, thus, promote discharging the swarf through the discharge channel 31 and out of the drill 1 via the discharge openings 37. In the present embodiment, all injection directions I are the same, but may alternatively be different from one another.

Alternatively, the injection directions I may be different for one or more of the injection channels 55, and/or one or more of the injection directions I may intersect the longitudinal axis X. E.g. in case of multiple injection openings 59 (and corresponding injection directions I) along the longitudinal axis X, the injection directions I closer to the first end 3a may have a greater helix angle as the injection directions I further away from the first end 3a, thereby creating a swirl flow in the discharge channel 31 closer to the first end 3a which is straightened (made more parallel to the longitudinal axis X) towards the discharge openings 37, leading to strong vacuum at the cutting tip 7 and smooth swarf discharge through the discharge openings 37. Further alternatively, the pressurized gaseous medium supply channel branches 51' may open into a single plenum within the circumferential wall 33 of the shaft 5, e.g. a plenum extending circumferentially in the circumferential wall 33, and the injection channels 55 may be connected to said plenum. The injection channels 55 may be formed via additive manufacturing of the drill 1, thereby creating smooth flow from the pressurized gaseous medium supply channel 51 or pressurized gaseous medium supply channel branches 51' into the injection channels 55. Alternatively or additionally, the injection channels 55 may be drilled from the outside through the circumferential wall 33 of the drilling portion 29 and intersecting the respective pressurized gaseous medium supply channel 51 or pressurized gaseous medium supply channel branches 51'. The outer holes in the circumferential wall 33 may be plugged, e.g. using solder or resin, or may remain open so as to supply some of the pressurized gaseous medium into the ring space between the circumferential wall 33 and the wall of the drilled hole, thereby providing a (partial) flow of the pressurized gaseous medium towards the cutting tip 7 at the outside of the shaft 5 which further cools the cutting tip 7 and pushes swarf away from the wall of the drilled hole. A ratio of pressurized gaseous medium directly supplied into the discharge channel 31 to the pressurized gaseous medium supplied to the outside of the drilling portion 29 may be 80:20 to 95:5.

### Drill - second embodiment

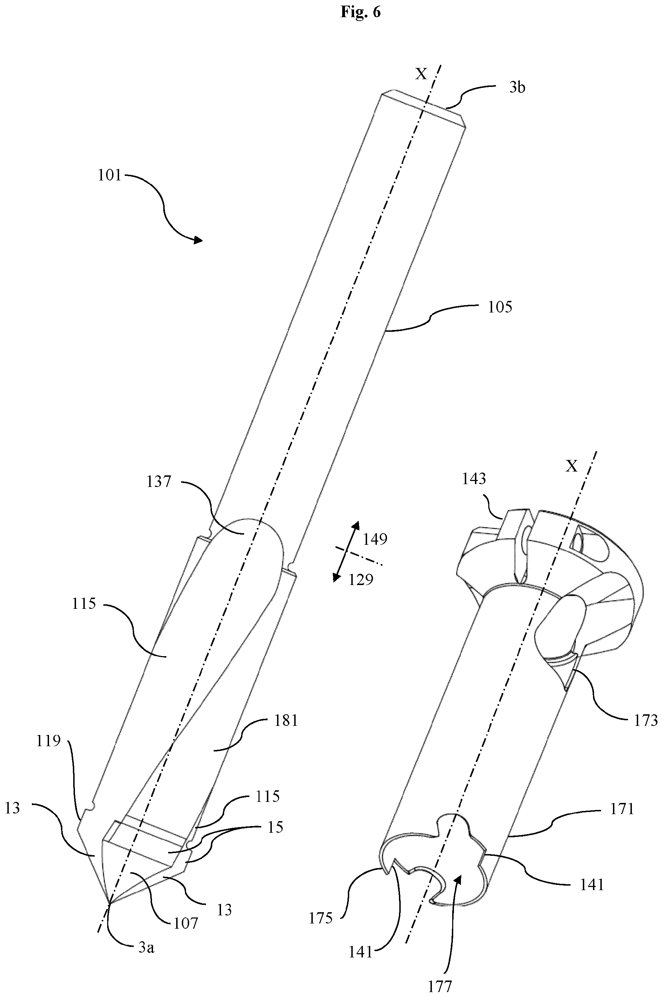

Referring to Figs. 6 to 10, the drill 101 of the second embodiment distinguishes over the drill 1 of the first embodiment by having a cutting tip 107 integral with the shaft 105 and by having a different configuration of the discharge channel 131, the pressurized gaseous medium supply channel 151 and the injection channel 155. That is, the general configuration of the cutting tip 107 at the first end 3a and of the shank portion 149 at the second end 3b remain the same as in the first embodiment so that description thereof will be omitted.

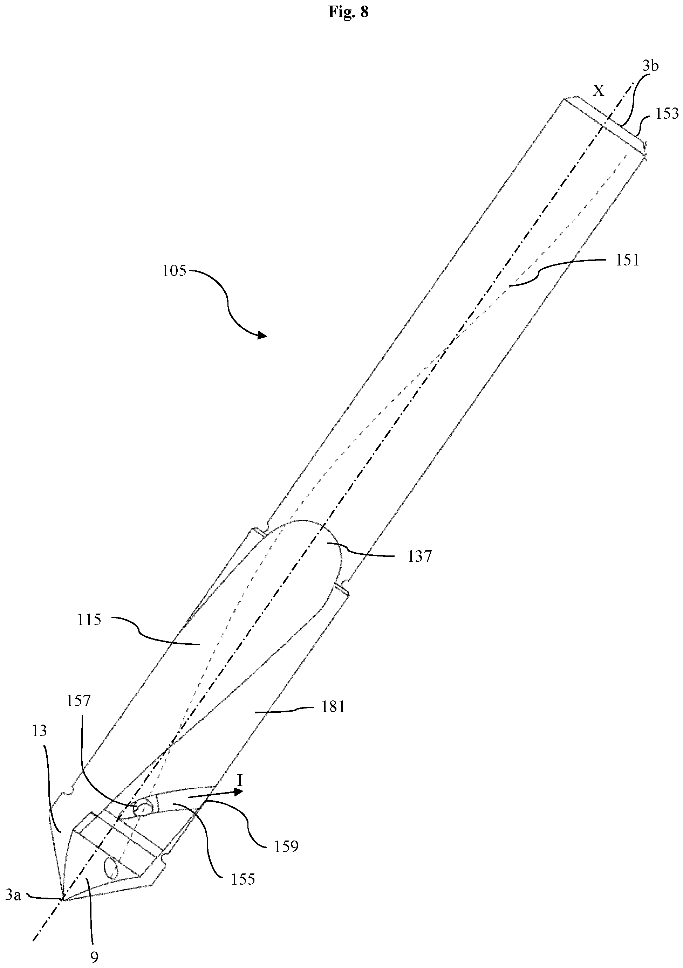

Referring to Figs. 6 and 8 showing the shaft 105, the shaft 105 of the drill 101 is formed as a drill bit with a drilling portion 129 extending from the first end 3a towards the second end 3b and the shank portion 149 connecting to the drilling portion 129 and extending therefrom towards the second end 3b.

The drilling portion 129 includes two flutes 115 respectively connected to the flutes 13 of the cutting tip 107 at a side away from the cutting edges 11 and extending towards the second end 3b in a helix manner. The flutes 115 terminate with respective discharge openings 137 at the end of the drilling portion 129. Said discharge openings 137 radially open in the circumference of the shaft 105 for discharging the swarf from the drill 1, e.g. in a ramp-like manner so as to achieve smooth chip discharge. That is, the flutes 115 of the drill bit each form a discharge channel 131 for transporting and discharging swarf generated by the cutting edges 11. The drill bit may be a conventional drill bit with regard to the configuration of the cutting tip 107 and the flutes 115 so that further description of corresponding details will be omitted.

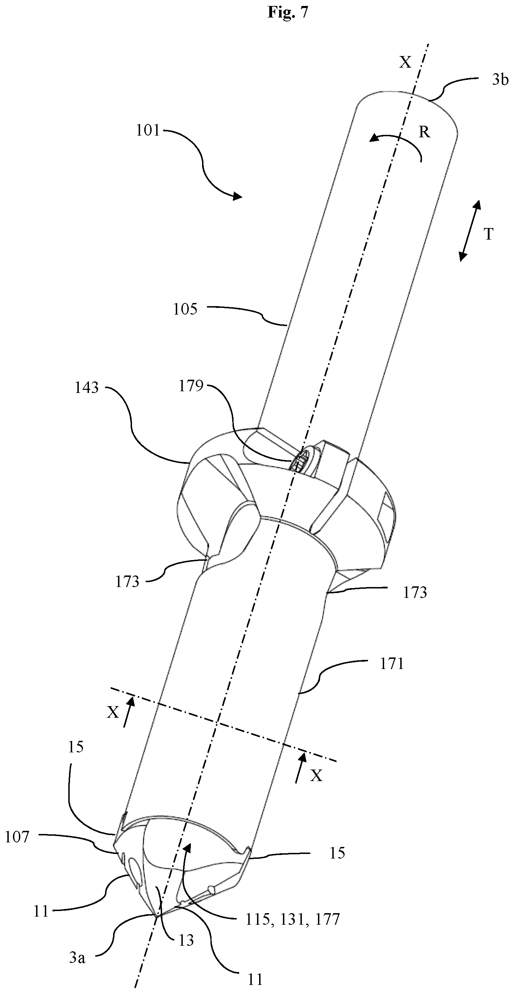

The drill 101 further comprises an elongated sleeve 171 configured to accommodate the shaft 105 in its hollow interior (see e.g. Fig. 7). The sleeve 171 is a hollow cylindrical body having an inner diameter essentially the same as the outer diameter of the drilling portion 129 of the shaft 105 and corresponds, in its length, at least to the length of the flutes 115 of the shaft 105. Further, the sleeve 171 has two radial openings 173 at one end (rear end or second end 3b) penetrating the circumferential wall 175 of the sleeve 171 and has an axial opening 177 at the other end (front end or first end 3a).

When the shaft 105 is accommodated in and fixed to the sleeve 171, the cutting tip 107 protrudes from the axial opening 177 of the sleeve171, the discharge channels 131 are radially delimited by the circumferential wall 175 of the sleeve 171 and the discharge openings 137 of the shaft 107 and the radial openings 173 of the sleeve 105 each overlap with one another so as to discharge swarf generated by the cutting edges 11.

The maximum drilling diameter of the drill 101 is defined by the cutting tip 107 (defined by the margins 15), i.e. the diameter of the hole to be drilled is larger than the outer diameter of the sleeve 171 covering the cutting portion 129 of the shaft 105. Like the mechanical stops 19, 41 of the drill 1 of first embodiment, the shaft 105 and the sleeve 171 each comprise similar mechanical stops 119, 141 which, when engaged with one another, form a form lock preventing relative movement of the sleeve 171 with regard to the shaft 105.

Further, the sleeve 171 comprises a flange portion 143 similar in configuration to the flange portion 43 of the drill 1 of the first embodiment. Further, in the second embodiment, the flange portion 143 comprises a connection means for fixing the sleeve 171 to the shaft 105, e.g. a screw 179 (see e.g. Fig. 7) serving as a clamping means for clamping the flange portion 143 at the shank portion 149 of the shaft 105. In conjunction with the mechanical stops 119, 141 the screw 179 fixes the sleeve 171 to the shaft 105 without any degree of freedom. When the sleeve 171 is connected to the shaft 105 and is carrying out a drilling operation, swarf generated by the cutting edges 11 is transported via flutes 13 of the cutting tip 107 into the respective discharge channels 131 (flutes 115 of the shaft 105) and is discharged from the drill 101 via the overlapping discharge openings 137 of the shaft 105 and the radial openings 173 of the sleeve 171.

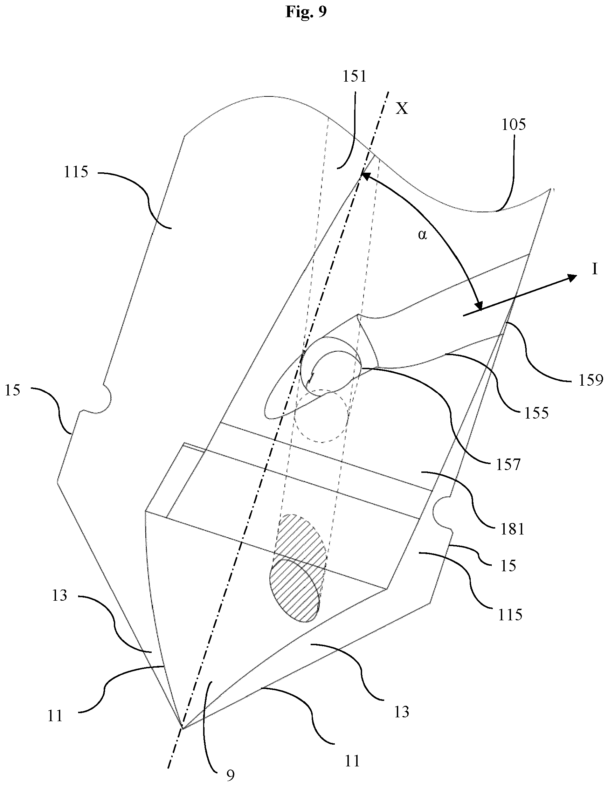

The drill 101 includes e.g. two pressurized gaseous medium supply channels 151 formed in the shaft 105. Since the configuration of said pressurized gaseous medium supply channels 151 is the same, only one is described in the following and shown in the figures, see e.g. Figs. 8 and 9. The pressurized gaseous medium supply channel 151 extends from a supply opening 153 at the second end 3b of the shank portion 149 of the shaft 105 towards the first end 3a. The supply opening 153 is formed at the end of the shaft 105 and offset from the longitudinal axis X. The pressurized gaseous medium supply channel 151 is formed along a helix following a corresponding land 181 of the flute 115 of the shaft 105. In this manner, a large cross-sectional area for flow of the pressurized gaseous medium can be achieved without weakening the web of the shaft 105, thereby enhancing durability of the drill 101. Alternatively, the pressurized gaseous medium supply channel 151 may be formed as a single bore in the web of the shaft 105, e.g. coincidental with the longitudinal axis X, thereby being easy to manufacture, e.g. via drilling.

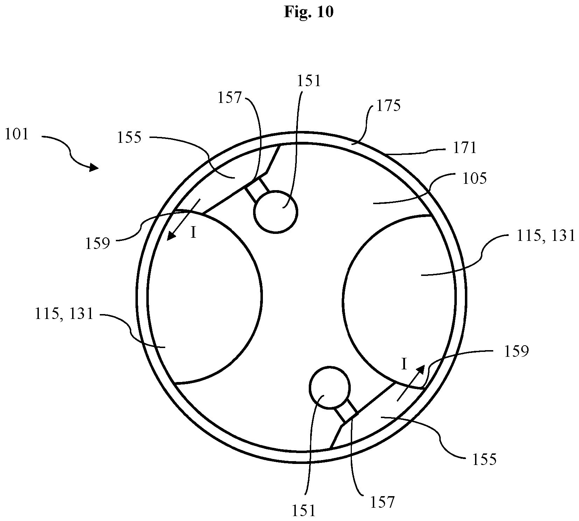

Further, two injection channels 155 are provided in the drilling portion 129, each connected with a respective one of the pressurized gaseous medium supply channels 151. Since the configuration of said injection channels 155 is the same, only one is described in the following. As can be seen in e.g. Figs. 9 and 10, the injection channel 155 is formed as a trough in the outer circumference of the shaft 105, i.e. in the land 181, and radially delimited by the circumferential wall 133 of the sleeve 171 (e.g. thereby easily defining the cross-sectional form of the injection channel 155). Its inflow opening 157 is either directly connected to the pressurized gaseous medium supply channel 151 or via an intermediate channel, e.g. a bore. Its injection opening 159 opens into the corresponding flute 115 of the shaft 105, i.e. into the discharge channel 131 formed by the flute 115 and the circumferential wall 133 of the sleeve 171. Hereby, the injection channel 155 is configured to inject the pressurized gaseous medium through the injection opening 159 into the discharge channel 131 in an injection direction I towards the second end 3b, thereby creating a vacuum at the first end 3 a.

An angle α between the longitudinal axis X and the injection direction I is circa. 40° to 60° for the injection channel 155 (see e.g. Fig. 9; in the present case the injection direction I and the longitudinal axis X do not cut each other, i.e. are skew lines). Further, the injection direction I has a helix angle, e.g. 0° to 40° (e.g. when the injection direction I is projected to an outer surface of the land 181 of the shaft 105, the angle α may be measured between a line drawn parallel to the longitudinal axis X and the injection direction I), thereby converging the injection direction I and an helix angle of the flute 115 (e.g. 15° to 25°, e.g. measured between a line drawn parallel to the longitudinal axis X and a ridgeline of the land 181 and the flute 115) so that the flow of pressurized gaseous medium into the flute 115 is smoother.

Further, when a distance along the longitudinal axis X from a point at which the longitudinal axis X intersects the first end 3a (point P) to the injection opening 159 is indicated as d, and, when viewed in a cross-section of the shaft 105 perpendicular to the longitudinal axis X and intersecting the injection opening 159, a maximum outer diameter of the shaft 105 (margins 15) is indicated as D, a ratio of D/d is in a range of 0,8 to 1,0.

Further, when viewed in a cross-section of the injection channel 155 perpendicular to the injection direction I, a minimum cross-sectional area of the injection channel 155 is indicated as a, and, when viewed in a cross-section of the shaft 105 perpendicular to the longitudinal axis X and intersecting the injection opening 159, a cross-sectional area of the discharge channel 131 is indicated as A, a ratio of A/a is in a range of 2 to 5.

By the above configuration, each configuration (D/d or A/a) alone or in conjunction with one another, generation of a vacuum at the first end 3a, i.e. the tip of the cutting tip 107, can be adjusted, e.g. dependent on the drilling diameter, the material to be cut, the rotational speed, the feed, each influencing the size of the swarf generated during cutting. That is, the vacuum is adjusted to be strongest close to the injection openings 159 and lesser at the tip (cutting edges 11 of the cutting tip 107), thereby creating a pressure differential from the tip 9 towards the second end 3b.

The swarf generated by the cutting edges 11 is forced into the flutes 13 by rotational force of the drill 101 and the pressure differential from the tip towards the injection openings 159 and is transported into the discharge channels 131 (flutes 115). Further, by injecting the pressurized gaseous medium into the discharge channel 131 towards the second end 3b, a flow of the pressurized gaseous medium is generated from the injection openings 159 towards the discharge openings 137 and radial openings 173, thereby forcing the swarf in the discharge channels 131 towards and out of the discharge openings 137 and radial openings 173 (pressurized gaseous medium and swarf flow). At the same time, the injected pressurized gaseous medium serves as a cooling media for the drill 101. Cooling, especially of the cutting tip 107, can be enhanced when the pressurized gaseous medium supply channels 151 open (i.e. terminate) into the conical end face 9 of the cutting tip 107, thereby directly supplying pressurized gaseous medium, e.g. containing a minimal amount of e.g. oil for lubrication, to the cutting edges 11. For example, 5 % to 20 % of the flow of the pressurized gaseous medium may be supplied to the cutting tip 107 and 80 % to 95 % of the flow of the pressurized gaseous medium may be supplied to the discharge channels 131. Splitting said flow may be achieved by adjusting, i.e. reducing, a cross-sectional area of the pressurized gaseous medium supply channels 151 downstream of the inflow opening 159. In case that the pressurized gaseous medium supply channels 151 are manufactured to open into the conical end face 9 and no additional cooling of the cutting tip 107 is required, the end of the pressurized gaseous medium supply channels 151 can be plugged, e.g. using a resin or solder.

Alternatively, the injection channel 155 may be a bore connecting to the pressurized gaseous medium supply channel 151 and may open into the flute 115. That is, the injection opening 159 is located within the flute 115, thereby matching the helix angle of the flute 115 (if present) and the helix angle of the injection direction I.

Further injection channels 155 and injection openings 159 may be present further downstream in the discharge channel 131, i.e. a plurality of injection openings 159 may be present in the discharge channel 131 from the first end 3a towards the second end 3b, thereby enhancing the flow of pressurized gaseous medium within the discharge channel 131 and, thus, increasing discharge of swarf.

The drill 101 of the second embodiment has a maximum drilling diameter of e.g. 40 mm and is usable for drilling of e.g. aluminum and fiber reinforced plastics. The shaft 105 is manufactured from high speed steel (HSS), cemented carbide, tungsten carbide, etc., e.g. using additive manufacturing technologies like selective laser sintering, casting, forging, etc. and/or subtractive manufacturing technologies like spark eroding, cutting, grinding, etc. The cutting edges 11 may be integral with the cutting tip 107 or may be part of separate cutting inserts attachable at the cutting tip 107. The cutting tip 107 may be deposited with a coating layer or tipped, e.g. TiCN, TiN, polycrystalline diamond, etc. on a surface thereof, e.g. the conical end face 9, the cutting edges 11, the flutes 13, etc. by a chemical or physical vapor deposition method (CVD or PVD) in order to enhance durability of the drill 101.

### Drill - variation of second embodiment

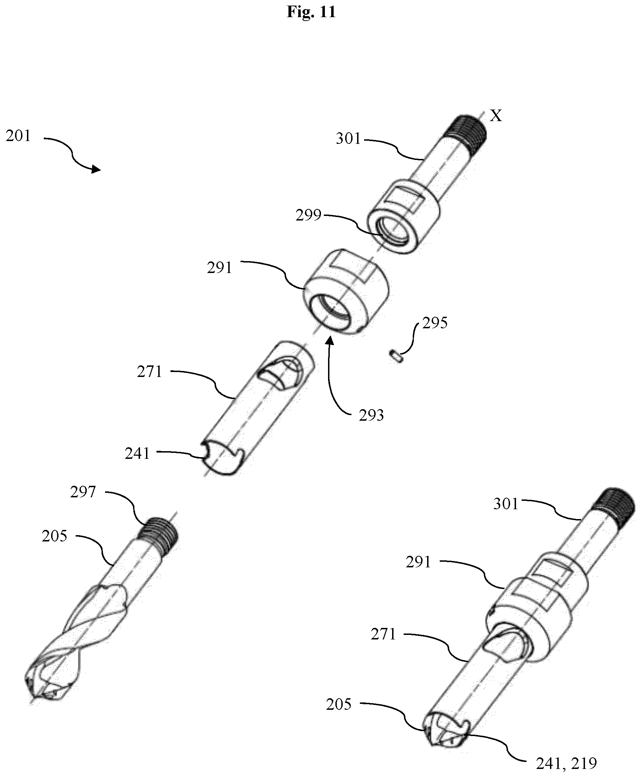

A variation of the drill 201 of the second embodiment is shown in Fig. 11 and distinguishes over said drill 101 by a sleeve 271 not having a flange portion. Such a sleeve 271 is easy to manufacture by subtractive manufacturing starting from a steel tube. For attaching the sleeve 271 at the shaft 205 of the drill 201, in addition to the mechanical stops 219, 241 which are similar to that of drill 101 of the second embodiment, a countersink sleeve 291 is provided. The countersink sleeve 291 is a tubular body including an axial bore 293. The axial bore 293 has essentially the same diameter as the outer diameter of the sleeve 271 so that the axial bore 293 accommodates one end (second end) of the sleeve 271 therein. A fixing means, e.g. a pin 295 or a screw, is provided so as to clamp the sleeve 271 in the axial bore 293 or to interlock the sleeve 271 with the countersink sleeve 291 so as to fix the sleeve 271 to the shaft 205 of the drill 201 without any degree of freedom. Further, in the variation of the second embodiment, the shaft 205 has an external thread 297 at its end away from the cutting tip (second end 3b) connectable with an internal thread 299 of a shank 301 for fastening the drill 201 to a drilling device. Countersink sleeve 291 and shank 301 may have common spanner flats so as to fix and/or fasten said components to one another and/or the drilling device. Apart from the above configuration, the drill 201 of the variation of the second embodiment is the same as drill 101 of the second embodiment.

### Drilling system

Referring to Fig. 12, a drilling system 1000 according to the present disclosure includes anyone of the drills 1, 101, 201 of the first and second embodiment, a drilling device 1100 configured for rotating and translating the drill 1, 101, 201 and having a drill chuck 1110 for attachment of the drill 1, 101, 201 to the drilling device 1100 and a pressurized gaseous medium source 1200.

The drilling device 1100 is a hand-held or stationary drilling machine configured to rotate the drill 1, 101, 201 around the longitudinal axis X (arrow R in Fig. 12) and translate the drill 1, 101, 201 forwards and backwards along the longitudinal axis X (Arrow T in Fig. 12). By adjustment of the rotational speed and the feed of the drill 1, 101, 201 by the drilling device 1100, the cutting speed can be adjusted, thereby adjusting the size and amount of swarf. Suitable drilling devices 1100 and drill chucks 1110 are readily adaptable by the person skilled in the art so that further description thereof will be omitted.

The pressurized gaseous medium source 1200 is in the present case a pressure vessel containing pressurized air or, alternatively, is a pneumatic system already present at a tooling site. In case of the pneumatic system, the drilling device 1100 may be powered by said pneumatic system thereby not requiring any electrical power. The pressurized gaseous medium source 1200 is connected to the supply opening 53, 153 and configured for supplying pressurized air to the drill 1, 101, 201 and adjusting a flow rate of the pressurized air so that a vacuum is created at the first end 3a of the drill 1, 101, 201. Using an adjustable valve 1210 of the pressurized gaseous medium source 1200, the flow 2000 of pressurized air from the pressurized gaseous medium source 1200 to the drill 1, 101, 201 is adjustable. The flow 2000 of pressurized air can be adjusted manually by the operator of the drill 1, 101, 201 or via a control device (not shown) of the drilling system 1000 so as to adjust the pressure of the flow 2000 of pressurized air, thereby adjusting the force of the vacuum generated (pressure differential from the cutting tip 7, 107 to the injection openings 59, 159). The pressure of the flow 2000 of pressurized air can be adjusted dependent on e.g. the drilling diameter, the material to be drilled, the cutting speed (rotational speed and feed), etc.

As described above, by adjusting the vacuum, the swarf discharge can be adjusted. That is, the pressurized air injected into the discharge channel 31, 131 forms a swarf and air flow 3000 transporting the swarf away from the first end 3a (cutting tip 7, 107) toward the discharge openings 37, 137 and out of the drill 1, 101, 201.

The drilling system 1000 may further comprise an oscillation device (not shown), e.g. implemented by the drilling device 1100, configured for oscillating the drill 1, 101, 201 along the longitudinal axis X. By oscillating the drill 1, 101, 201 (see above described vibration assisted drilling technology), generation of long swarf can be prevented. That is, the swarf size can be further adjusted by the oscillation (e.g. in addition to adjustment parameters like feed and rotational speed), thereby enhancing swarf discharge.

The drilling system 1000 may further include an additional vacuum source 1300 connected to the discharge opening 37, 137 or the radial opening 173 via a suction collar 1310. The suction collar 1310 may be a ring-shaped device which is stationary with regard to the rotation of the drill 1, 101, 201 and translatable together with the drill 1, 101, 201 so as to accommodate the drill 1, 101, 201 therein and cover the circumference of the drill 1, 101, 201 in an area in which the discharge openings 37, 137 and the radial openings 173 are located. The suction collar 1310 includes an inner cavity 1311 suitable sized to receive the swarf ejected from the drill 1, 101, 201 and being in fluid communication with the discharge opening 37, 137 or the radial opening 173. The suction collar 1310 further includes a suction port 1312 in fluid communication with the inner cavity 1311 and connected to the vacuum source 1300. The suction collar 1310 contacts the drill 1, 101, 201, i.e. the shaft 5 or the sleeve 171, 271, in a manner so as to reduce the amount of air sucked into the cavity 1311 by other paths as through the drill 1, 101, 201, e.g. using a labyrinth seal or sealing rings.

The vacuum source 1300 may be a separate blower or may create the vacuum using the pneumatic system, if present. The vacuum source 1300 creates a separate vacuum effective in the inner cavity 1311 of the suction collar 1310. Thereby, a pressure differential from the discharge opening 37, 137 or the radial opening 173 is created towards the vacuum source 1300 so as to supplement swarf discharge out of the drill 1, 101, 201, through the suction collar 1310, through the vacuum source 1300 and into a swarf discharge bin 1320. Consequently, the swarf and air flow 3000 in the discharge channel 31, 131 passes through the discharge opening 37, 137 and/or the radial opening 173, the inner cavity 1311 and the suction port 1312 of the suction collar 1310 and enters the vacuum source 1300 where the swarf is separated from the air and discharged into the swarf discharge bin 1320. The vacuum generated by the vacuum source 1300 can be adjusted manually by the operator or may be adjusted by a control device (not shown) of the drilling device 1100, e.g. dependent on e.g. the material to be drilled, size (diameter) of the drill, cutting speed (rotational speed and feed), etc.

### Drilling method

A drilling method according to the present disclosure comprises rotating one of the above described drills 1, 101, 201 and supplying a pressurized gaseous medium to the supply opening 53, 153 of the drill 1, 101, 201, so that a vacuum is created at the first end 3a of the drill 1, 101, 201, thereby removing swarf generated by the cutting edges 11 from the cutting tip 7, 107. The vacuum can be adjusted manually by the operator or may be adjusted by a control device dependent on e.g. the material to be drilled, the size (diameter) of the drill, the cutting speed (rotational speed and feed), etc. When the drill 1, 101, 201 being rotated is brought in contact with the work piece W, the hole can be drilled as follows: By translating the rotating drill 1, 101, 201 along its longitudinal axis X into the work piece W, the cutting edges cut into the material of the work piece W, thereby creating swarf forced away from the cutting tip 7, 107 by the rotation of the drill 1, 101, 201 and the pressure differential and into the discharge channel 31, 131 and out of the drill 1, 101, 201 via the discharge openings 37, 137 and/or the radial openings 173. In case that the drilling method drills a hole into a blind cavity of the work piece W, the vacuum can be adjusted so that all swarf will be transported away from the cutting edges 11 thereby preventing swarf from entering the blind cavity and contaminating the cavity.

Further, when the drill 1, 101, 201 is translated into the work piece W for drilling, the drill may be oscillated along its longitudinal axis X, thereby further adjusting the size of the swarf.

By the above described drilling method, when the drill 1, 101, 201 is removed from the drilled hole, a hole is achievable (substantially) without remaining swarf therein thereby obviating the need to carry out a subsequent cleaning of the drilled hole.

### Use

The before described drill and/or drilling system can be used for drilling of metal, fiber reinforced plastics, wood, graphite, and/or composites (e.g. laminates) thereof, and/or for drilling a through hole opening into a blind cavity, for example a through hole having a diameter equal to or less than 40 mm.

### List of reference signs

- 1, 101, 201: drill
- 3a: first end
- 3b: second end
- 5, 105, 205: shaft
- 7, 107: cutting tip
- 9: conical end face
- 11: cutting edges
- 13: flutes (cutting tip)
- 15: margin
- 17: external thread
- 19, 119, 219: mechanical stop (cutting tip)

- 29, 129: drilling portion
- 31, 131: discharge channel
- 33: circumferential wall
- 35: axial opening (shaft)
- 37, 137: discharge opening
- 39: internal thread (shaft)
- 41, 141, 241: mechanical stop (shaft; sleeve)
- 43, 143: flange portion (collar portion)
- 45: spanner flat
- 47: chamfering cutting edge
- 49, 149: shank portion
- 51, 151: pressurized gaseous medium supply channel
- 51': pressurized gaseous medium supply channel branches
- 53, 153: supply opening
- 55, 155: injection channel
- 57, 157: inflow opening
- 59, 159: injection opening

- 115: flutes (drill bit)
- 171, 271: sleeve
- 173: radial opening
- 175: circumferential wall
- 177: axial opening (sleeve)
- 179: screw
- 181: land

- 291: countersink sleeve
- 293: bore
- 295: pin
- 297: external thread (shaft)
- 299: internal thread (shank)
- 301: shank

- 1000: drilling system
- 1100: drilling device
- 1110: drill chuck
- 1200: pressurized gaseous medium source
- 1210: valve
- 1300: vacuum source
- 1310: suction collar
- 1311: inner cavity
- 1312: suction port
- 1320: swarf discharge bin

- 2000: flow of pressurized air
- 3000: swarf and air flow

- X: longitudinal axis
- R: rotation direction
- T: translation direction
- I: injection direction
- P: point
- W: work piece

## Claims

1. A drill (1, 101, 201), extending from a first end (3a) to a second end (3b) along a longitudinal axis (X) and comprising a cutting tip (7, 107) at the first end (3a) and a shaft (5, 105, 205) extending from the cutting tip (7, 107) towards the second end (3b),
the cutting tip (7, 107) comprising at least one cutting edge (11) located at the first end (3a) and a flute (13) extending from the cutting edge (11) towards the second end (3b), and
the shaft (5, 105, 205) comprising
a circumferentially enclosed discharge channel (31, 131) connecting to the flute (13) at a side away from the cutting edge (11), extending towards the second end (3b) and terminating in a discharge opening (37, 137) in an outer circumference of the shaft (5, 105, 205) for discharging swarf generated by the cutting edge (11),
a pressurized gaseous medium supply channel (51, 151) having a supply opening (53, 153) for receiving a pressurized gaseous medium and extending from the supply opening (53, 153) towards the first end (3a), the supply opening (53, 153) located closer to the second end (3b) as the discharge opening (37, 137), and
an injection channel (55, 155) extending between an inflow opening (57, 157) connected to the pressurized gaseous medium supply channel (51, 151) and an injection opening (59, 159) connected to the discharge channel (31, 131), wherein the injection channel (55, 155) is configured to inject the pressurized gaseous medium through the injection opening (59, 159) into the discharge channel (31, 131) in an injection direction (I) towards the second end (3b), thereby creating a vacuum at the first end (3a).

2. The drill (1, 101, 201) according to claim 1, wherein,
when a distance from a point (P) at which the longitudinal axis (X) intersects the first end (3a) to the injection opening (59, 159) is indicated as d, and,
when viewed in a cross-section of the shaft (5, 105, 205) perpendicular to the longitudinal (X) axis and intersecting the injection opening (59, 159), a maximum outer diameter of the shaft (5, 105, 205) is indicated as D,
a ratio of D/d is in a range of 0,5 to 1,5, preferred in a range of 0,7 to 1,2, and further preferred in a range of 0,8 to 1,0.

3. The drill (1, 101, 201) according to claim 1 or 2, wherein an angle (α) formed between the longitudinal axis (X) and the injection direction (I) is in a range of 5° to 85°, preferred in a range of 10° to 60°, and further preferred in a range of 15° to 30°.

4. The drill (1, 101, 201) according to anyone of the preceding claims, wherein,
when viewed in a cross-section of the injection channel (55, 155) perpendicular to the injection direction (I), a minimum cross-sectional area of the injection channel (55, 155) is indicated as a, and,
when viewed in a cross-section of the shaft (5, 105, 205) perpendicular to the longitudinal axis (X) and intersecting the injection opening (59, 159), a cross-sectional area of the discharge channel (31, 131) is indicated as A,
a ratio of A/a is in a range of 5 to 20, preferred in a range of 4 to 15, and further preferred in a range of 3 to 10.

5. The drill (1) according to anyone of the preceding claims, wherein the cutting tip (7) is separate from the shaft (5) and attachable to shaft (5).

6. The drill (1) according to anyone of the preceding claims, wherein
the shaft (5) comprises a tubular body having the discharge channel (31) formed as its hollow interior and enclosed by a circumferential wall (33) of the shaft (5), and
the pressurized gaseous medium supply channel (51) and the injection channel (55) are formed in the wall (33).

7. The drill (101, 201) according to anyone of claims 1 to 5, wherein
the shaft (105, 205) is a drill bit including a flute (115) connected to the flute (13) of the cutting tip (107) at a side away from the cutting edge (11) and extending towards the second end (3b) in the form of a helix, the flute (115) of the shaft (105, 205) forming the discharge channel (131),
the drill (101, 201) further comprises an elongated sleeve (171; 271) configured to accommodate the shaft (105, 205) in its hollow interior, the sleeve (171, 271) having a radial opening (173) at one end penetrating a circumferential wall (175) of the sleeve (171, 271) and an axial opening (177) at the other end, wherein,
when the shaft (105, 205) is accommodated in and fixed to the sleeve (171, 271), the cutting tip (7, 107) protrudes from the axial opening (177) of the sleeve (171, 271), the discharge channel (131) is radially delimited by the circumferential wall (175) of the sleeve (171, 271) and the discharge opening (137) of the shaft (105, 205) and the radial opening (173) of the sleeve (171, 271) overlap with one another so as to discharge swarf generated by the cutting edge (11).

8. The drill (101, 201) according to claim 7, wherein the pressurized gaseous medium supply channel (151) is formed along a straight line in the web of the shaft (105, 205) or is formed along a helix following a corresponding land (181) of the flute (115) of the shaft (105, 205).

9. The drill (101, 201) according to claim 7 or 8, wherein the injection channel (155) is formed as a trough in the outer circumference of the shaft (105, 205) and radially delimited by the circumferential wall (175) of the sleeve (171, 271).

10. The drill (1, 101, 201) according to anyone of the preceding claims, wherein the shaft (5, 105, 205) is a 3D printed body, optionally a 3D printed and sintered metal body.

11. A drilling system (1000), including
a drill (1, 101, 201) according to anyone of the preceding claims,
a drilling device (1100) configured for rotating and translating the drill (1, 101, 201), and
a pressurized gaseous medium source (1200) connected to the supply opening (53, 153) and configured for supplying a pressurized gaseous medium to the drill (1, 101, 201) and adjusting a flow rate of the pressurized gaseous medium so that a vacuum is created at the first end (3a) of the drill (1, 101, 201).

12. The drilling system (1000) of claim 11, further including an oscillation device connected to the drill (1, 101, 201) and configured for oscillating the drill (1, 101, 201) along the longitudinal axis, thereby adjusting the size of the swarf generated during cutting, and/or the drilling system (1000) further comprising a vacuum source (1300) connected to the discharge opening (37, 137) or the radial opening (173) and configured for applying a vacuum.

13. Use of the drill (1, 101, 201) according to anyone of claims 1 to 10 and/or use of the drilling system (1000) according to anyone of claims 11 and 12 for drilling of metal, fiber reinforced plastics, and/or composites thereof, and/or for drilling a through hole opening into a blind cavity, for example a through hole having a diameter equal to or less than 40 mm.

14. A drilling method, comprising the steps of
rotating the drill (1, 101, 201) according to anyone of claims 1 to 10 and
supplying a pressurized gaseous medium to the supply opening (53, 153) of the drill (1, 101, 201), so that a vacuum is created at the first end (3a) of the drill (1, 101, 201), thereby removing swarf generated by the cutting edge (11) from the cutting tip (7, 107).

15. The drilling method according to claim 14, wherein, when the drill (1, 101, 201) is translated into the work piece for drilling, the drill (1, 101, 201) is oscillated along its longitudinal axis (X).
